# EUROPEAN PATENT SPECIFICATION

(11) **EP 3 987 305 B1**
(45) Date of publication and mention of the grant of the patent: **14.06.2023**
(21) Application number: 19732643.2
(22) Date of filing: 21.06.2019
(51) Int. Cl.: G01S 7/4863, G01S 7/4865, G01S 17/14, G01S 17/18, G01S 7/487, G01S 17/894

(54) **DIRECT TIME-OF-FLIGHT DEPTH SENSOR ARCHITECTURE AND METHOD FOR OPERATING OF SUCH A SENSOR**
DIREKTE FLUGZEITTIEFENSENSORARCHITEKTUR UND VERFAHREN ZUM BETRIEB EINES SOLCHEN SENSORS
ARCHITECTURE DE CAPTEUR DE PROFONDEUR À TEMPS DE VOL DIRECT ET PROCÉDÉ DE FONCTIONNEMENT DUDIT CAPTEUR

(43) Date of publication of application: 27.04.2022
(73) Proprietor: ECOLE POLYTECHNIQUE FEDERALE DE LAUSANNE (EPFL), 1015 Lausanne (CH); Technische Universiteit Delft, 2628 CN Delft (NL)
(72) Inventor: PADMANABHAN, Preethi, 2000 NEUCHATEL (CH); ZHANG, Chao, 2624 VT DELFT (NL); CHARBON, Edoardo, 1008 JOUXTENS-MEZERY (CH)
(74) Representative: Banse & Steglich Patentanwälte PartmbB
(86) International application number: PCT/EP2019/066478
(87) International publication number: WO 2020/253968

(56) References cited:
- US-A1- 2019 174 120
- MAIK BEER ET AL: "Background Light Rejection in SPAD-Based LiDAR Sensors by Adaptive Photon Coincidence Detection", SENSORS, vol. 18, no. 12, 8 December 2018 (2018-12-08), page 4338, XP055670338, CH ISSN: 1424-8220, DOI: 10.3390/s18124338 cited in the application
- CRISTIANO NICLASS ET AL: "A 128 128 Single-Photon Image Sensor With Column-Level 10-Bit Time-to-Digital Converter Array", IEEE JOURNAL OF SOLID-STATE CIRCUITS, IEEE, vol. 43, no. 12, 10 December 2008 (2008-12-10), pages 2977-2989, XP011238651, ISSN: 0018-9200, DOI: 10.1109/JSSC.2008.2006445

## Description

### Technical Field

The present invention relates to 3D imaging sensor devices, particularly to imaging sensor devices using direct time-of-flight and single photon detection. The present invention further relates to measures to provide depth sensing in a wide dynamic range scenario with targets from low to high reflectivities.

### Technical background

Light detection and ranging systems (LiDAR) can be applied in various technical fields. LiDAR systems are already used for various applications such as proximity sensing in the consumer field, automobiles e.g. for cruise control and depth sensing, spacecraft navigation, assembling line robotics, augmented and virtual reality, surveillance and the like.

While there are various techniques for 3D imaging, one preferred technique applies direct time-of-flight measurement for laser pulses using photon detecting elements. The depth sensors using direct time-of-flight (DTOF) imaging are often based on time-correlated single-photon counting (TCSPC).

In conventional DTOF image sensors, depth sensing is achieved by transmitting a periodically pulsed light source to an object (target) and detecting the time of arrival of the reflected photons by a high-performance photo detector conventionally configured as avalanche photodiodes, single-photon avalanche diodes (SPADs), silicon photomultipliers or the like. The photodetectors are arranged in pixel arrays, and an electronic circuitry is used to measure the time-of-flight, e.g. by means of a time-to-digital converter (TDC).

Still, there are various challenges in acquiring high quality LiDAR measurement which include robustness to ambient light, wide dynamic range targets, and the like. Ambient light suppression has been addressed by coincidence detection which provides a technique utilizing spatial and temporal closeness of photons within a laser pulse to filter out background noise photons. While TCSPC with coincidence detection have shown effective noise-filtering properties, imaging in a wider dynamic range scenario is an ongoing challenge, particularly in a flash LiDAR setup where the entire target of interest is illuminated at once with a wide-angle laser beam.

For example, document M. Beer et al., "Background Light Rejection in SPAD-Based LiDAR Sensors by Adaptive Photon Coincidence Detection", Sensors 2018, 18, 4338, MDPI addresses this by implementing variable coincidence thresholds.

Common requirements are accuracy and detection speed, while ensuring long operating distance, robustness to background noise and robustness to interference from other LIDAR systems. Various architectures have been proposed typically making use of resource sharing that often introduces tradeoffs between pixel count and speed.

Maik Beer et al., "Background Light Rejection in SPAD-Based LiDAR Sensors by Adaptive Photon Coincidence Detection", Sensors, vol. 18, no. 12, 1 December 2018 (2018-12-01), page 4338 discloses a light detection and ranging (LiDAR) system based on silicon single-photon avalanche diodes (SPAD) and operating based on the adaptive adjustment of photon coincidence detection to suppress the background light and simultaneously improve the dynamic range. An adaptive photon coincidence detection is provided wherein the parameters of the photon coincidence detection are adjusted to the actual measured background light intensity, giving a reduction of the event rate dynamic range and allowing the perception of high dynamic scenes.

C. Niclass et al., "A 1 28 1 28 Single-Photon Image Sensor With Column-Level 10-Bit Time-to-Digital Converter Array", IEEE JOURNAL OF SOLID-STATE CIRCUITS, IEEE, vol. 43, no. 12, 1 December 2008 (2008-12-01), pages 2977-2989 discloses an imager for time-resolved optical sensing comprising an array of 128 × 128 single-photon pixels.

It is an object of the present invention to provide a direct time-of-flight depth imaging sensor which provides an improved dynamic range and an effective background noise filtering property.

### Summary of the invention

This object has been achieved by the direct time-of-flight depth imaging sensor according to claim 1 and the method for operating the direct time-of-flight depth sensor according to the further independent claim.

Further embodiments are indicated in the depending subclaims.

According to a first aspect a direct time-of-flight depth imaging sensor is provided comprising:
- an array of photodetectors arranged in one or more subgroups, wherein each subgroup is divided into a plurality of minigroups of photodetectors;
- digital processing and communication units each associated to one of the minigroups, each comprising:
   ∘ a minigroup pixel address register to store an address of the photodetector in the respective minigroup which has detected the last photon detection event within a coincidence window, wherein the coincidence window corresponds to detection window of a fixed duration starting with the first photon detection event within the respective subgroup; and
   ∘ a minigroup timestamp unit configured to store minigroup timestamp data of the last photon detection event received in the coincidence window;
- a time to digital converter configured to generate a subgroup timestamp data about the first photon detection event in the subgroup during the coincidence window.

Moreover, a readout unit may be configured to read out the subgroup timestamp data and, for each of the minigroups, minigroup timestamp data, and the minigroup pixel addresses of the last received photon, so that depth image data is provided in which pixel addresses are associated with depth information corresponding to the subgroup timestamp data and minigroup timestamp data.

The above architecture of a direct time-of-flight depth imaging sensor allows to provide a more detailed depth information for pixels within a subgroup of the full pixel array of the sensor with a low amount of additional circuitry. Particularly, the depth information as given by the subgroup timestamp data as can be obtained by a conventional sensor can be enhanced by multiple minigroup timestamp data which may give additional information to select a distance range in which an object shall be detected.

In conventional approaches, where first received photon detection event wins over by blocking subsequent photon detection events or where multiple events are combined, photons from only brighter (higher reflectivity) targets in a scene are more frequently captured compared to darker (lower reflectivity) targets in the scene, a typical problem with wide dynamic range targets. The new approach can enable multiple simultaneous detections from a wide dynamic range scene due to its non-blocking nature. The subgroup is clustered into minigroups which are embedded with independent timestamping capability. This allows event propagation even in a wide dynamic range and to image different parts in the target scene with varying reflectivities without affecting their individual probabilities of detection.

Furthermore, the imaging sensor may comprise a photon rank unit within each of the minigroups which are configured to store photon rank data indicating the rank of the photons received in the respective minigroup during the coincidence window.

It may be provided a coincidence tree configured to propagate photon detection events and to generate the minigroup pixel address corresponding to the last photon detection event in the respective minigroup within the coincidence window for storing in the corresponding minigroup pixel address register.

Furthermore, a subgroup event counter may be configured to provide a subgroup event count corresponding to the number of photon detection events received in the respective subgroup during the coincidence window; wherein the data processing unit is further configured to process the subgroup event count. Thereby, the number of photons registered by the event counter and, stored by the photon rank register in every minigroup also indicates the returning signal quality thus, allowing to also adjust the illuminator power used to illuminate the target scene and modify the field-of-view that the sensor sees. For example, a lower event count in a certain measurement window can imply lower returning signal quality, thus requiring an increase in the illuminator source power being sent out to the target. In another situation, it could also imply a high background noise being integrated from a wide field of view (FOV) and thus, a lower FOV could also be alternatively used to enhance the effective signal to background noise ratio (SBR). In general, based on the actual situation in a real LiDAR system, event count information provided in the subgroup is highly useful.

By means of a photon activity unit, particularly a summing circuit, an indication about a photon activity rate detected by all photodetectors of the respective subgroup may be obtained.

A coincidence adaptation unit may be configured to determine a coincidence threshold depending on the photon activity rate, wherein a coincidence comparison unit is provided to signal a validation signal for reading out the minigroup timestamp data and minigroup pixel address data of the minigroups and the subgroup timestamp data if the photon detection event count is equal or higher than the coincidence threshold event count.

At least one gating unit may be provided to compare the subgroup timestamp data value with at least one given gating range to generate a validation signal when the subgroup timestamp data value is within the at least one given gating range.

The at least one gating unit may have two equality comparison blocks to compare the subgroup timestamp data value with two neighboring gating ranges to generate the validation signal when the subgroup timestamp data value is within one of the two neighboring gating ranges.

Several gating units may be provided to compare the subgroup timestamp data value with different, particularly non-neighboring gating ranges to generate the validation signal when the subgroup timestamp data value is within one of the different gating ranges.

The gating range(s) may be provided by means of histogramming, wherein the subgroup timestamp data value(s) with the highest number of photon detection counts during a predetermined number of laser cycles is/are selected to define the gating range(s).

A mode selector unit may be provided to use the validation signals from at least two of:
- from the coincidence comparison unit;
- from the at least one gating unit; and
- from a conjunction of the outputs of the coincidence comparison unit and the at least one the gating unit;
for providing the depth image data.

Depending on the validation signal, the depth image data may be read out into a FIFO for further processing in the readout unit.

Moreover, an oscillator of the time-to-digital converter may provide a frequency signal reference to the minigroup timestamp units whose data is measured between the arrival time of the first photon detection event up to end of the coincidence window to obtain the minigroup timestamp data.

It may be provided that the image sensor comprises a light source, particularly a laser diode, is controlled and triggered by a synchronization signal to emit light pulses, particularly laser pulses, directed onto a desired field of view wherein the emitted light is widened to flash-like illuminate a scene in the desired field of view including the object to be detected.

According to a further aspect of the invention a method for operating a direct time-of-flight depth imaging sensor is provided comprising an array of photodetectors arranged in one or more subgroups, wherein each subgroup is divided into a plurality of minigroups of photodetectors, comprising the steps of:
- Storing a minigroup pixel address of the photodetector in the respective minigroup which has detected the last photon detection event within a coincidence window, wherein the coincidence window corresponds to detection window of a fixed duration starting with the first photon detection event within the respective subgroup; and
- storing minigroup timestamp data of the last photon detection event received in the coincidence window;
- generating a subgroup timestamp data about the first photon detection event in the subgroup during the coincidence window;
- processing the subgroup timestamp data, and, for each of the minigroups, minigroup timestamp data, and the minigroup pixel addresses of the last received photon, so that depth image data is provided in which photodetector addresses are associated with depth information corresponding to the subgroup timestamp data and minigroup timestamp data.

### Brief description of the drawings

Embodiments are described in more detail in conjunction with the accompanying drawings, in which:
- Figure 1: schematically shows a block diagram of a direct time-of-flight depth sensor.
- Figure 2: shows a block diagram for showing a subgroup of pixels of the DTOF depth sensor of Figure 1.
- Figure 3: shows a timing diagram of the coincidence event processing for each of the minigroups in the subgroups.
- Figure 4: shows a schematic diagram for a tree unit to build up the coincidence tree.
- Figure 5: shows a schematic for a coincidence tree within minigroups along with signal flow through the tree units and address (ID) generation.
- Figure 6: shows a schematic of minigroup timestamp unit of each minigroup used to provide a coarse timestamping.
- Figure 7: shows a relationship between coincidence threshold and photon activity rate.
- Figures 8a and 8b: show a photograph of the target scene and a measured result of the target in a scanning LiDAR setup, respectively.
- Figures 9a, 9b and 9c: illustrate simulated scenery reconstructions with single coincidence thresholds of 5, 2, and variable threshold, respectively, in a 50klux background light condition.
- Figure 10a- 10d: shows a schematic of a realization of a gating function and an illustration of an example of the gating process by means of an exemplary histogram.
- Figure 11: shows a scenery with closely placed glass- cup target scene where gating along with minigroup timestamping can be applied.

### Description of embodiments

In the following the configuration of a direct time-of-flight (DTOF) single-photon avalanche diode (SPAD) based 3D imaging sensor device is described in detail.

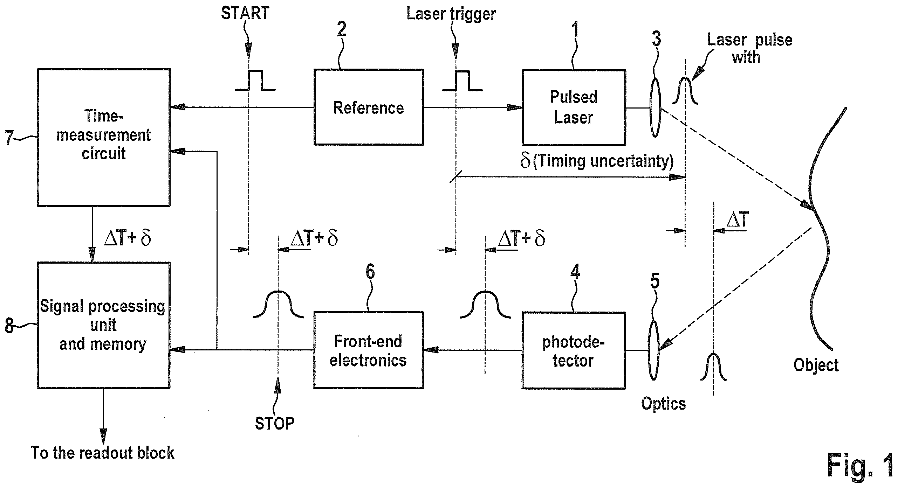

Figure 1 depicts the generic concept of a DTOF imaging sensor device according to the present invention. On a sending side S, a diode laser 1 is controlled and triggered by a synchronization signal provided by a local reference electrical source 2 so that a pulsed laser signal LS is directed onto an object O. The pulsed laser signal LS is widened to illuminate the desired field of view through one or more optical elements 3. The pulsed laser signal is thereby widened to flash-like illuminate a scene including the object O to be detected.

The pulsed laser signal LS is reflected by the object O onto a receiver side R. The receiver side R is formed with a photodetector array 4 comprising uniformly arranged photodetectors. On the photodetector array 4 the reflected pulsed laser light LR is collected by a receiver optics 5 and detected by the photodetectors. The photodetectors may be formed by single-photon detecting photodiodes, such as SPADs. The signals from the photodiodes are received by means of an associated front-end electronics unit 6 and further propagated to a time-measuring circuit 7 such as a time-to-digital converter from which the timestamp data can be obtained based on the arrival time of the reflected pulsed laser signal LR which has been received in one of the associated photodiodes. The photon events are processed using the signal processing unit 8 and the data is read out to a readout unit 9 via a FIFO.

Measuring the travel time of the pulsed laser signal to the object O and back to the photodiode array 4 indicates the distance of the object O from the imaging device. The distance d to the object is related to the travel time of light ΔT by d= c ΔT/2. In order to accumulate sufficient statistics in terms of the photon detection events and high precision, a measurement may be performed over number of laser cycles. This is a common technique referred to as time-correlated single photon counting (TCSPC) where a histogram may then be plotted with horizontal axis indicating time and vertical axis showing photon counts accumulated for a particular travel time ΔT. In general, throughout system, multiple timing uncertainties can be present which can either reflect as timing offsets and /or jitter in the acquired timestamp; they are all accounted for, by the parameter δ in Figure 1.

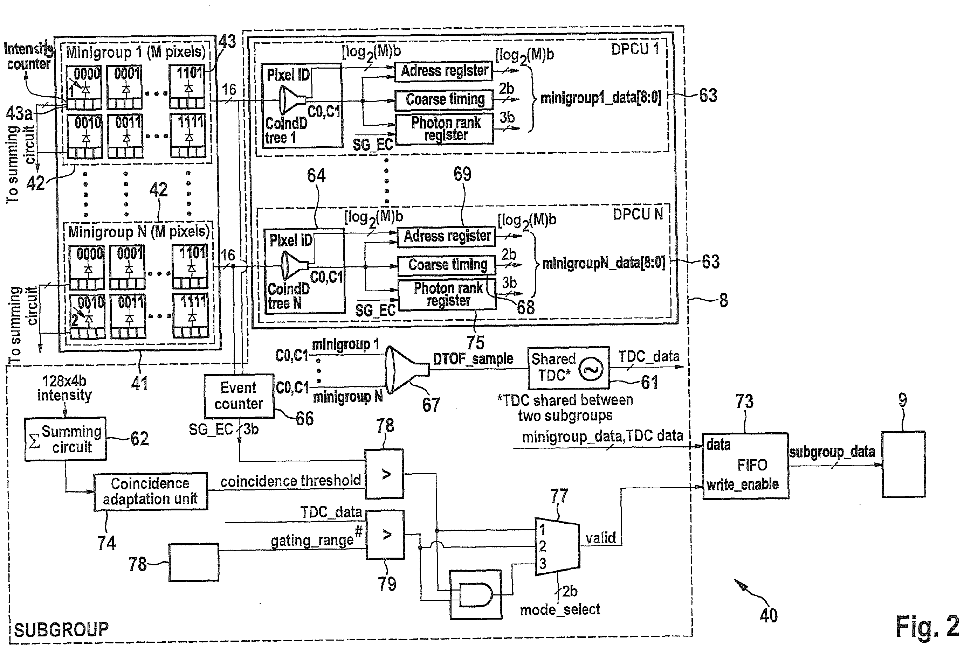

In Figure 2, a sensor module 40 is schematically shown which comprises one or more subgroups 41 of pixels (photodetectors) of the photodetector array 4 and the front-end electronics unit 6, which converts the laser pulse signals into digital signal pulses. Each DTOF depth imaging sensor comprises a number of such sensor modules 40 whose subgroups 41 of photodetectors form a pixel array by which a target scenario shall be mapped and analyzed to obtain distance information from objects O within the scenario. In the shown embodiment, two subgroups 41 form a sensor module 40 and both of the subgroups 41 share a single always on time-to-digital converter 61 with independent lines for timestamping in the respective subgroups 41.

Each subgroup 41 is further clustered into the number N of minigroups 42 each comprising an array of number M of pixels 43. The pixels 43 may be formed with high-performance photodetectors, such as avalanche photodiodes, single-photon element diodes or silicon photo multipliers as known in the art and with the respective supporting and control logic to output a photon detection signal (typically a digital pulse) once a photon has been detected. In an exemplary implementation of the depth imaging sensor, each subgroup 41 may consist of 16 × 8 pixels connected to 16 × 8 photodetectors, wherein each minigroup 42 has 16 pixels and the number of minigroups is 8.

Furthermore, each pixel 43 may comprise an intensity counter 43a, such as a 4-bit (or any other number of bits) intensity counter as an example, to count received photons over a predetermined period of time or a predetermined number of cycles. The outputs of the intensity counters 43a are collected by a photon activity unit, such as a summing circuit 62. The summing circuit 62 is part of the signal processing unit 8 and adds the outputs of all intensity counters 43a of the pixels 43 within the associated subgroup 41, in this example case, 128 × 4b intensity information from the 128 pixels in the subgroup are combined. The accumulated value of the summing circuit 62 may be monitored over a predetermined period of time or a predetermined number of laser pulse periods as a photon activity rate R.

Each of the minigroups 42 is connected with a local digital processing and communication unit (DPCU) 63 of the signal processing unit 8. In general, the DPCU 63 performs for each minigroup 42 functions of coarse timestamping, determining the minigroup pixel addresses of each photon detection event and to determine the photon rank within a coincidence window in the minigroup. The photon rank substantially indicates how many photons occurred in a particular coincident event, particularly useful to acquire information on the target in terms of what the signal quality is. A high reflective target may reflect more correlated photons and thus, may result in more coincident events.

The DPCUs 63 for each of the minigroups 42 include a coincidence tree 64 for event propagation and the generation for the minigroup pixel address data, minigroup timestamp units 68, minigroup pixel address registers 69 to store minigroup pixel address data and photon rank units 75, e.g. photon rank registers, to store a photon rank count.

Conventionally, such coincidence trees are configured for each of the subgroups 41 to always propagate the first incoming photon detection event, while the successive photon detection events within the same coincidence window are ignored. The coincidence trees 64 for the minigroups 42 as used herein have a non-blocking nature and enable multiple detections (of subsequent events as well) up to a maximum of the number of minigroups, i.e., 8 in this exemplary implementation, due to the availability of minigroup timestamp units 68 inside the minigroups 42 as described below. This allows event propagation even in a wide dynamic range scenario without necessarily blocking or discarding a photon detection event with a lower reflectivity which has fewer photon detection events compared to a higher reflective target in a scene. The conventional approach, however, has the disadvantage that in a wide dynamic scene by always propagating photons from only brighter (higher reflectivity) targets in a scene which also has darker (lower reflectivity) targets. The new approach allows to further provide a higher resolution within the photodetectors of each subgroups so that different objects detected by different photodetectors in the same subgroup can be associated with different distances, i.e. different timestamps.

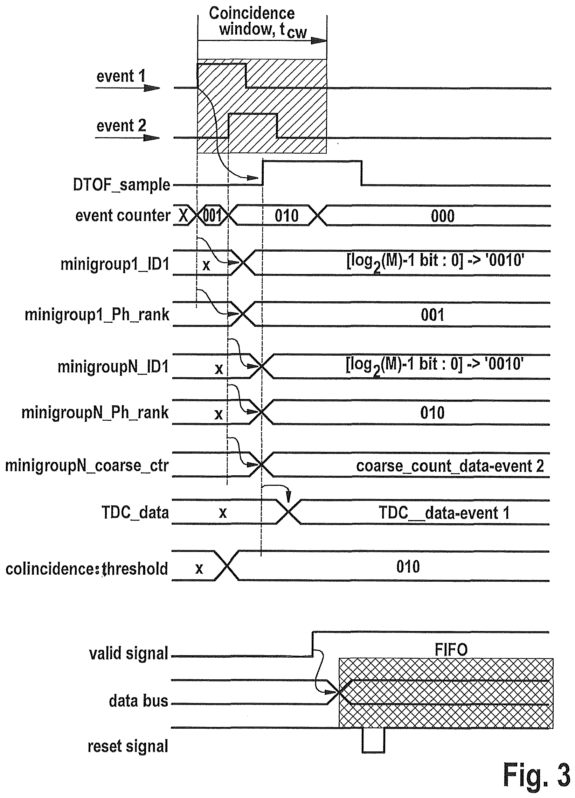

A timing diagram for the subgroup function performed in the front-end electronics unit 6 and signal processing unit 8 is shown in Figure 3. The coincidence tree 64 in the DCPU 63 is used to propagate the first photon signal to a shared time to digital converter (TDC) 61 while the signal from successive photons is locally processed in the DPCUs 63 and used to obtain additional information about the target scene. The leading edge of the first photon signal starts the coincidence window valid for the respective subgroup 41. Typically, the duration of the coincidence window is set depending on the pulse width of the lasers assuming that the timing jitter caused by the circuitry, such as the detector jitter and the TDC jitter, is lower than the jitter of the laser pulse. The duration of the coincidence window can basically be preset, considering the timing jitters of all the involved components. The duration of the coincidence window can be exemplarily tuned between values of 500 ps to 4 ns to allow for this variation.

For every subgroup 41, an event counter 66 can track the number of photons received within the coincidence window and the output of this counter, the subgroup event count "SG_EC" in Figure 2, is sampled by photon rank unit 75 in the minigroup DPCUs 63 which stores this value, thereby indicating the rank of a photon occurring within the minigroups 42. The rank of the photon indicates the order of a photon detection event received by the respective minigroup 42. As an example, the event counter 66 may have a size of 3 bits for tracking up to 7 photons. The size of the event counter 66 and thus, the photon rank unit 75 may be selected based on the preset duration of the coincidence window considering that the probability of having an overflow of the event counter 66 is less likely.

Referring to the exemplary timing diagram of Figure 3, the event counter 66 in the respective subgroup 41 increments the subgroup event count to 001 at the first photon detection event, i.e. the arrival of a photon. The first received photon is denominated as "event1" herein. This signal is also propagated through the coincidence tree 64 of the respective minigroup 42 by which the first photon has been received, and the delayed photon detection signal of "event 1" (C0 or C1 in Figure 2) latches the subgroup event count of the event counter 66 using the photon rank register 75 in the minigroup 42 that has detected the incoming photon, minigroup1 in the illustration. The photon rank unit 75 basically then stores and provides the minigroup photon rank data associated with the photon received by a particular minigroup, here denoted as minigroup1_PH_rank. This information indicates that "event 1" was the first photon detection event which occurred within the whole subgroup.

Parallelly or at the same time, the coincidence tree 64 of each minigroup 42 provides a minigroup pixel address data ID of the photon detection events, in the present case a 4-bit minigroup pixel address data for 16 pixels of the respective minigroup 42. The pixel address data of a received photon by each minigroup 42 is stored in the minigroup pixel address register 69 having associated registers denominated minigroup1_ID1 ... mini groupN_ID1. Typically, within each minigroup 42, the minigroup pixel address data ID is overwritten by the minigroup pixel address data of subsequent photon detection events, should there be another one occurring within the same coincidence window. However, the photon rank unit 75 is continuously updated so that the overall number of events within one minigroup 42 is stored in the respective photon rank unit 75 of the respective DPCU 63.

In case of a second photon detection event in the subgroup 41 within the coincidence window, indicated as "event2" in minigroup N, the photon rank unit 75 increments to 2. Like "event1", the photon rank unit 75 in the DPCU 63 in minigroup N stores the minigroup photon rank information (increments the photon rank) (minigroupN_PH_rank+1) and the minigroup pixel address data ID of "event2".

The detection signal of "event1" is propagated through the coincidence tree 64 from the respective minigroup, here the first minigroup 42 and passed along via a combining coincidence tree unit 67 to the shared TDC 61 whose states are sampled, generating subgroup timestamp data of the first incoming photon within the respective coincidence window. The TDC 61 may be shared between two subgroups each providing subgroup timestamp data on different output lines.

The combining coincidence tree unit 67 collects all photon detection events from the minigroup, propagates the event signal to the TDC 61 and generates the subgroup pixel address of the photodetector in the subgroup 41 so that the subgroup timestamp data provided by the TDC 61 and the subgroup pixel address of the first photon detection event in the subgroup 41 are stored.

The TDC 61 may be designed using an 8-stage differential voltage controlled oscillator oscillating at a selectable frequency (typically between 1 to 2 GHz) which clocks a 10-bit gray counter to provide a 14-bit binary timestamp. At the rising edge of the propagated photon detection signal, the states of the TDC 61 are sampled. In the present example, the TDC 61 is considered to be 14-bit wide to cover a range of 1 µs with a VCO running at 1 GHz, offering a resolution of about 60 ps.

Each DPCU 63 further includes the minigroup timestamp unit 68 to provide a minigroup timestamp data of events occurring within the minigroup 42. Therefore, the VCO signal (frequency signal reference) of the TDC 61 is distributed across the DPCU 63 of the minigroups 42 to the minigroup timestamp unit 68 of each DPCU 63 which act as a coarse counting logic to provide a minigroup timestamp data of the respective last events in each of the minigroups 42 within the coincidence window. Since a subsequent (or last) event can overwrite minigroup pixel address data and minigroup photon rank, the minigroup timestamp data is also overwritten and updated corresponding to those subsequent events.

Therefore, within a subgroup 41, the following data is generated:
- Subgroup timestamp data of first event within a coincidence window including the subgroup pixel address/ID of the first photon detection event in the subgroup 41;
- minigroup timestamp data of the first events (or last) in each of the minigroups 42;
- the minigroup pixel address data of the respective last event in the respective minigroup 42 within the coincidence window; and
- the minigroup photon rank information of the photon incident in the respective minigroup 42.

The ability to provide pixel address/ID of events facilitates exploiting the full sensor resolution, down to a single photodetector in the pixel array. Providing additional minigroup timestamp data within the minigroups 42 enhances the timing throughput by a factor of the number of minigroups 42 by enabling multiple simultaneous timing measurements. The event counter 66 and the photon rank substantially indicate how many photons occurred in a coincident event (within the same coincidence window), particularly useful to acquire information on the target in terms of what the signal quality is.

The signal processing unit 8 collects all above-mentioned data and provides enhanced depth information for the pixels of the image to be detected. After every photon detection event, the combining coincidence tree unit 67 resets itself, making it available for the successive detection.

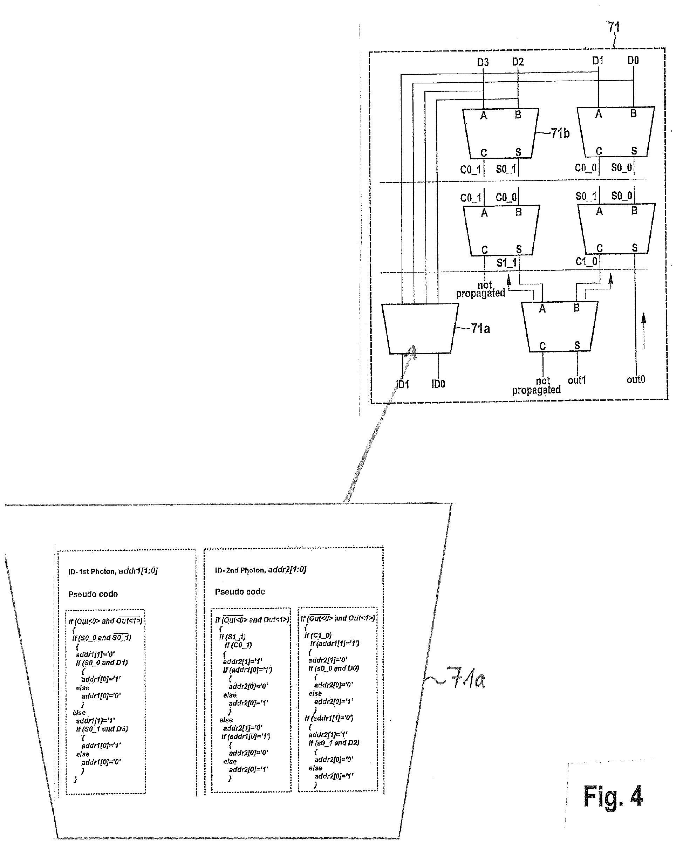

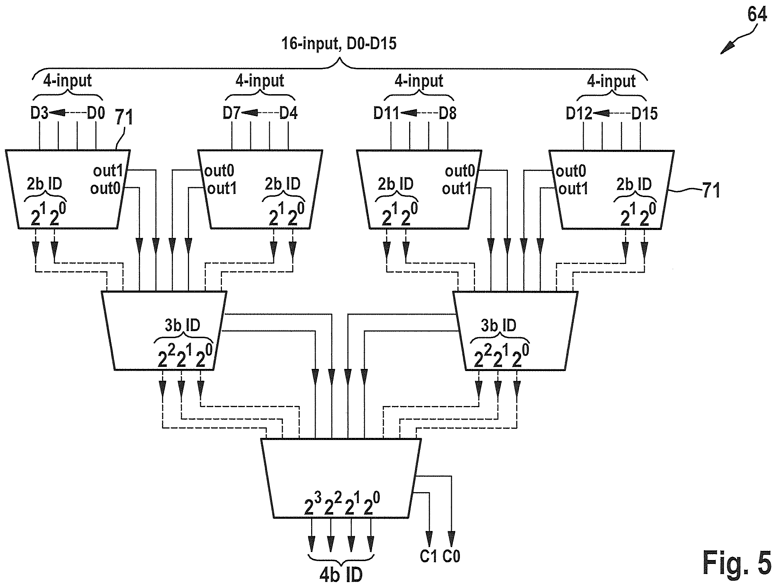

As exemplarily shown in conjunction with Figures 4 and 5, the coincidence tree 64 uses tree units 71 purposely designed using only half adders to contribute to the address generation. The inputs of the half adders 71b are connected to a photodetector's output generated by the pixels 43 to receive the photon detection signals D0-D3 of four photodetectors of a minigroup 42. The coincidence tree 64 provides a path for event propagation and also an address decoding logic 71a, readily designed by re-using the already available signals through the designed coincidence tree circuit.

As shown in Figure 4, 4-input tree units 71 as components for the coincidence tree 64 are built using half-adders in a binary weighted fashion. The 4-input tree units 71 are connected with the input lines associated with respective photodetector 43 so that the photodetector event signals propagate and generate outputs, out1 and out2 which represent a 2-bit equivalent count value of photon detection events in the associated 4 photodetectors 43.

The address decoding logic 71a which may be part of each tree unit 71 allows to generate a 2-bit binary address of the input lines associated with the respective photodetectors 43 (the four photon detection signals D0 to D3 coming from 4 photodetectors) so that the address of the photodetector 43 (pixel address) in which the photon detection event has been incurred can be obtained, as bits ID1 and ID0. The pseudo code in Figure 4 shows the logic for generating the address data addr1 and addr2 for the first and second photon detection event of the photodetector in one of the tree units 71, respectively.

The tree unit output signals out0 and out1 from the 4-input tree unit 71 relate to the four photon detection signals D0 to D3 and act as a 2-bit counter. Therefore, when the first photon detection event "event1" occurs, out0 goes to logic high, while out1 is still logic low, and when the second photon detection event arrives in the same minigroup 42 out1 goes to logic high and out0 goes to logic low. Therefore, the tree unit output signals out0 and out1 provide the binary count of the photon detection events occurring in the respective part of the minigroup 42.

As shown in the example of Figure 5, the minigroup 16-input coincidence tree 64 comprises 4 such tree units 71 of Figure 4 and the combining coincidence tree unit 67 which then combines the output (C0 and C1 in Figure 5) from each of the minigroup coincidence trees 64 and propagates down using cascaded tree units 71. The signal generated at the end of the combining coincidence tree unit 67 is denoted as "DTOF_sample" in Figure 2, which is used to sample the states of the shared TDC 61 and provide the full timestamp corresponding to the first event within a coincidence window. The minigroup pixel address data ID corresponding to the photon detection events is generated at the minigroup level using the dedicated 16-input coincidence tree 64 which provides a 4-bit minigroup pixel address data of the respective event and is stored at the minigroup pixel address register 69 of the respective minigroup 42.

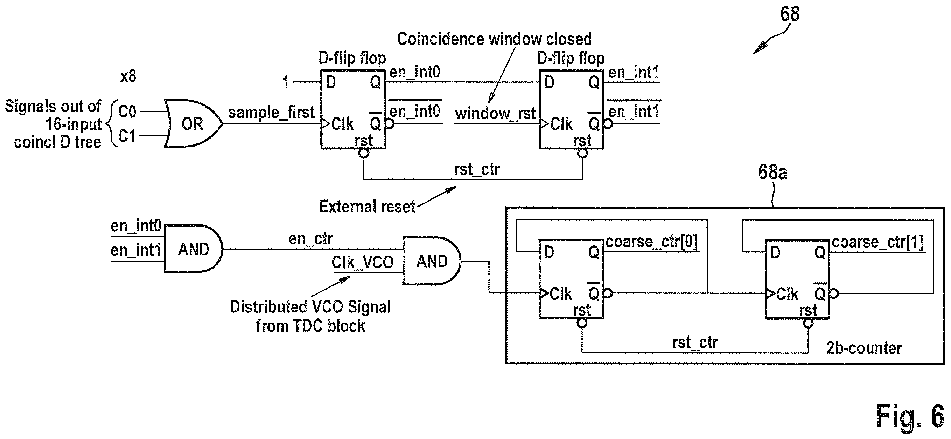

The event counter signals C0 and C1 of each minigroup 42 are also utilized to enable a (here 2-bit) coarse timestamp unit 68 which is clocked by the distributed VCO signal from the shared TDC 61 as mentioned before, a schematic of which is exemplarily shown in Figure 6. The counter 68a of the minigroup timestamp unit 68 as shown just has 2 bit resolution and will be enabled/started on the arrival of the first photon detection event within a minigroup 42 when the reset signal is not active ("window_rst" or "rst_ctr" in Figure 6). Triggered by each succeeding photon detection event, the counter value is stored as the minigroup timestamp data.

As an example, Figure 6 schematically shows the minigroup timestamp unit 68 having an OR conjunction of the two signals C0, C1 received from each DCPU 63, the output of which is latched during the coincidence window, and the counter 68a in the minigroup timestamp unit 68 starts incrementing from the occurrence of the first photon detection event and the end of the coincidence window marks the end of the counting process.

Above mentioned data, i.e. subgroup full timestamp data from the TDC 61, minigroup timestamp data of each of the minigroups 42, minigroup pixel address data of the respective last event in the respective minigroup 42, and the photon rank data as the event count in each minigroup 42, can be read out into a FIFO 73 for further processing. Reading out may be signaled by a validation signal "valid". The source of the validation signal "valid" may be controlled by a mode selector 77 which allows propagation of the validation signal "valid" according to an externally provided mode select signal "mode_select" which is a 2-bit signal to select between 4 modes.

Hence, the depth imaging sensor can be operated in different modes which is externally controlled by the mode select signal "mode_select":
- In a first mode where there is a low photon activity, the coincidence threshold is set to 1, so that only the first photon information is processed;
- In a second mode with a coincidence threshold higher than 1 and multiple coincidence thresholds under a high background noise situation,
- In a third mode with electrical gating which is used to image a target around a certain range of interest; and
- In a fourth mode with a coincidence threshold and an electrical gating to provide enhanced noise filtering.

Thus, based on a chosen mode, a valid signal "valid" is propagated in order to write above indicated data into a FIFO register 73 as shown in Figure 2.

In other embodiments the mode selector can be omitted so that the image sensor is permanently operated under one of the above second to fourth modes.

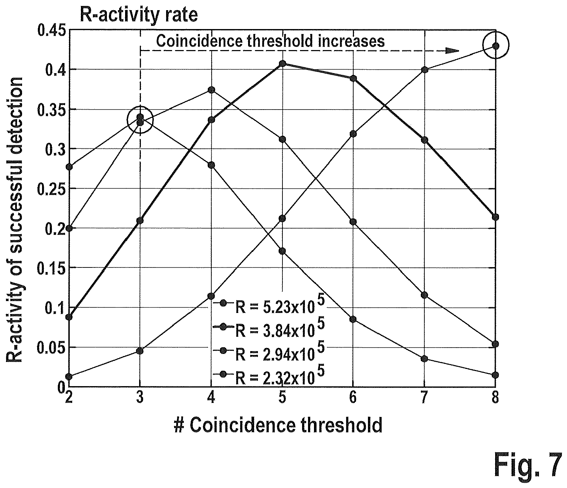

For the second and fourth operating modes, a coincidence threshold shall be defined in a coincidence adaptation unit 74 as shown in Figure 2. The coincidence threshold can be set to vary depending on the photon activity rate R as shown in Figure 7. Figure 7 shows how coincidence photon detection count may increase for increasing photon activity R. Therefore, the coincidence threshold may be set according to the actual photon activity rate R as provided by the summing circuit 62. In different sceneries, a higher reflective target will imply higher photon activity requiring higher coincidence threshold and vice versa. Hence, since a fixed coincidence threshold cannot yield an accurate reconstruction of the different sceneries, the ability to set multiple thresholds will enhance the detection quality.

By means of a coincidence adaptation unit 74, which receives the photon activity rate R from the summing circuit 62, a photon activity rate can be associated to the actual coincidence threshold by means of a preset look-up table which can be implemented on-chip as an integrated solution or off-chip on an FPGA. By means of a coincidence comparison unit 78 the coincidence threshold can be compared with the subgroup event counter 66 and subgroup event count SG_EC. The validation signal "valid" is generated and output if the subgroup event count SG_EC is equal or higher than the coincidence threshold.

As an example, for R = 5 × 10⁵ photon detection events per second, 500 clock cycles of a 1 MHz laser will imply 250 accumulated photon detection events while R = 2 × 10⁵ photon detection events per second would result in 100 accumulated photon detection events. In the first case, the coincidence threshold would be set to 7, and in the latter case, the coincidence threshold could be set to 3. This feature can be particularly useful while imaging a wide dynamic range scene with varying target reflectivities which result in different activity rates.

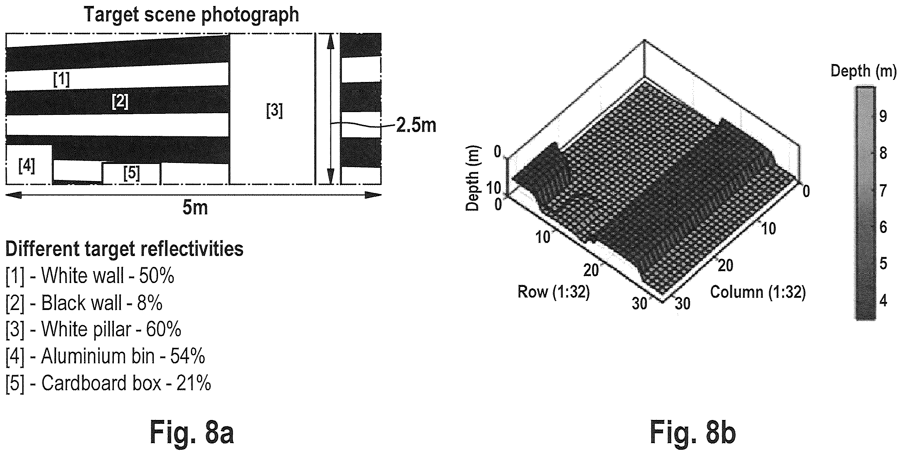

The effect of the variable coincidence threshold can be seen by evaluating figures shown in Figure 8a and 8b. Figure 8a, 8b show a 32×32 resolved image measured in a scanning LiDAR setup. This measured image is used as an input target scene to evaluate the functionality of the proposed DTOF sensor architecture.

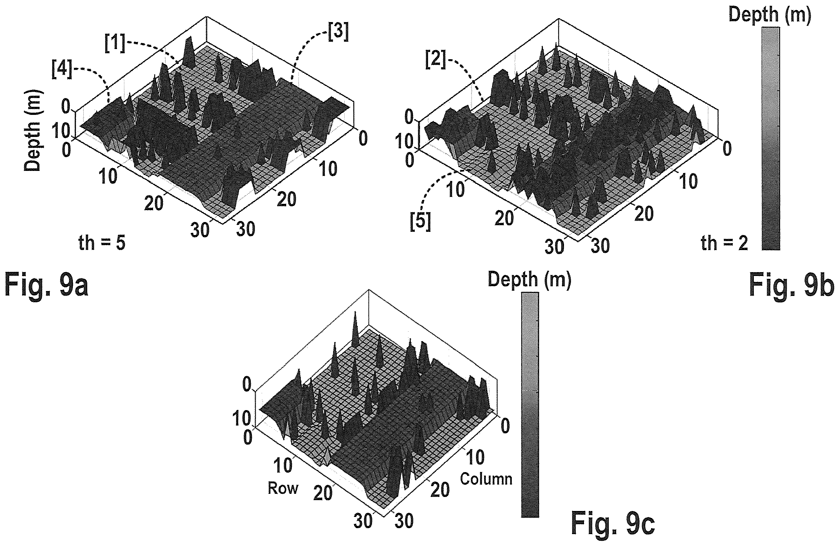

The histogram is computed for every pixel and the combined 32×32 image is then reconstructed by taking the peak values on every computed histogram through analytical simulations. Figures 9a, 9b and 9c illustrate simulated reconstruction with single coincidence thresholds and a variable threshold in a 50klux background light condition.

In Figure 9a, with a coincidence threshold *th* = 5, the objects referenced as [1], [3] and [4] are more accurately reconstructed compared to rest of the scene owing to their higher relative reflectivities. Similarly, in Figure 9b, with coincidence threshold *th* = 2, objects [2] and [5] take preference over the rest of the scene.

As shown in Figure 7 it is shown how coincidence threshold th increases for increasing photon activity R to provide a successful detection (temporal error (σ) < 230ps), implying that a single threshold cannot yield an accurate reconstruction of a scene and a higher (lower) reflective target will imply higher (lower) photon activity requiring higher (lower) coincidence thresholds.

Figure 9c illustrates reconstruction using a subgroup of 8x8 for coincidence and minigroup of 2×2. As can be seen, the target is more accurately reconstructed compared to Figure 9a and 9b with only 7% incorrect sampling.

For the third and fourth mode, electrical gating alternatively or in addition to using a variable coincidence threshold, every subgroup 41 is designed to optionally operate under time-gating set electrically around the desired target range. Gating provides a validation signal "valid" when the TDC count provided by the TDC 61 is within a predefined gating range. For instance, the 10 MSB bits of the subgroup timestamp data of the TDC 61 may be compared in a gating unit 79 (see Figure 2) with a gating range to provide a validation signal "valid" if the subgroup timestamp data is within the gating range. Each subgroup 41 can be uniquely configured to operate in a predetermined gating range of e.g. 5-bit width (the width of the gating ranges can differ in another embodiment). Several gating units 79 can be provided the outputs of which are OR-ed (OR operation), thus allowing to detect two or more peaks of photon detection event counts within every subgroup 41.

The gating range may be selected by a histogram of TDC count data where the photon detection events are accumulated with respect to the subgroup timestamp data values over a number of laser pulse cycles. To also allow gating for different detection peaks with respect to the subgroup timestamp data values two or even more gating units 79 may be provided the outputs of which provide validation signals valid to read out the image data into the readout unit 9.

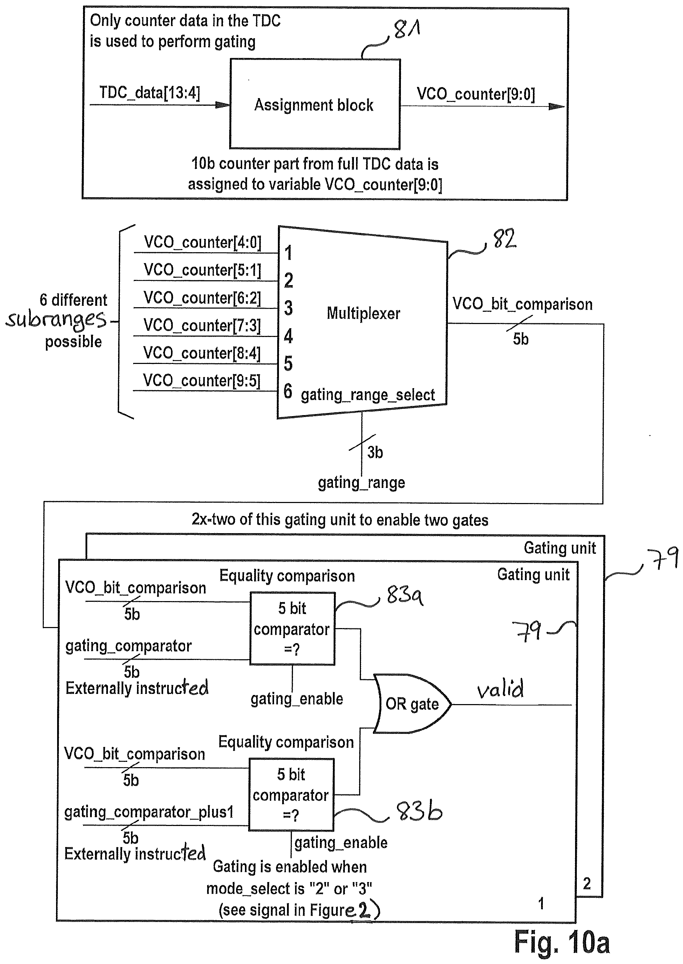

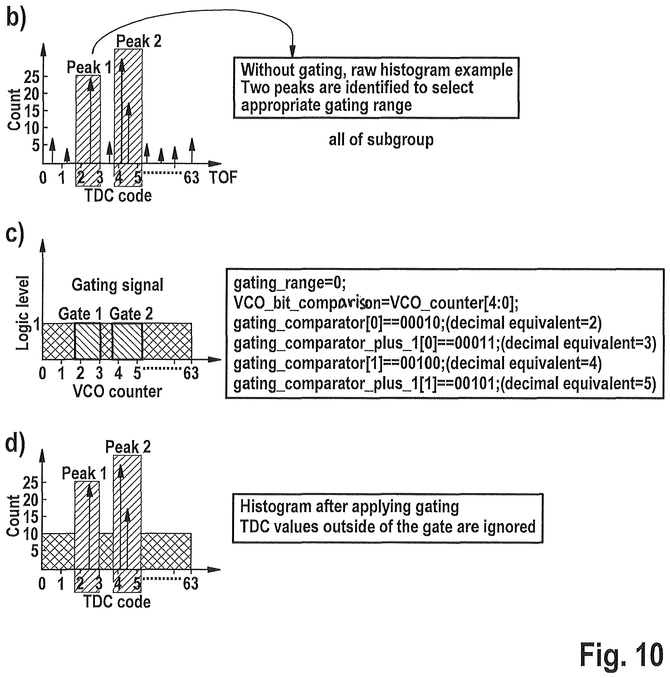

As seen in the example of Figure 10a, 10 MSB bits TDC_data[13:4] from the TDC 61 are assigned in an assignment block 81 to a variable "VCO_counter" which generates several subranges of counter values each corresponding to a number of succeeding bits taken from the TDC counter value. Further, a succeeding multiplexer 82 is configured to select among a number of subranges (here 6), each 5-bit wide (although other widths can be provided as well) covering the entire range of the VCO-counter, from VCO_counter[4:0] to VCO_counter[9:5]. The selection is made by means of a reference gating range which is externally provided. The selected subrange is then output as "VCO_bit_comparison", which is basically a bit part (cut out of succeeding bits) of the subgroup timestamp data selected to compare with a reference predefined gating range, denoted as "gating_comparator" in a first equality comparison block 83a in Figure 10a.

Figures 10b - 10d explain the gating concept with an illustration. Figure 10b shows the raw histogram of the TOF value (timestamp value) acquired with the TDC 61 on X-axis and photon detection counts on the Y-axis. Two peaks (highest and second highest) are identified in this histogram. The TOF position on the X-axis corresponding to these peaks is extracted to then choose a gating range. By means of several gating units one could have several different gating ranges over the entire 10-bit counter values. In Figure 10b, the TDC code corresponding to highest peaks lies between TDC codes 2 and 3 for peak 1 and between 4 and 5 for peak 2. Thus, a gating range corresponding lower most 5 bits of the TDC count, i.e. subgroup timestamp data, may be used for comparison purposes. In this case, two gating ranges may be applied to the gating units 79 and a comparator logic then compares the subgroup timestamp data with the set gating ranges, i.e., gate 1 between TDC code 2 and 3 and gate 2 between TDC code 4 and 5 in this example (shown in Figure 10c). As shown in Figure 10d, the histogram after applying gating then effectively processes and stores signals within the gating range and subgroup timestamp values outside of the set gating ranges are ignored and do not produce a validation signal for reading out data.

As shown in the above illustration, the peaks 1 and 2 may fully occur within a particular subrange, in this case subrange 1, i.e., VCO_counter[4:0]. However, in a specific case where the peaks may occur at the interface of two subranges, the identified peak would need to be compared with gating ranges belonging to two different (and neighboring) subranges. In order to accommodate such a situation, there is a second equality comparison block 83b within the same gating unit with a reference predefined gating range, "gating_comparator_plus1", equal to gating_comparator +1 by value. In this way the gating range is enlarged to

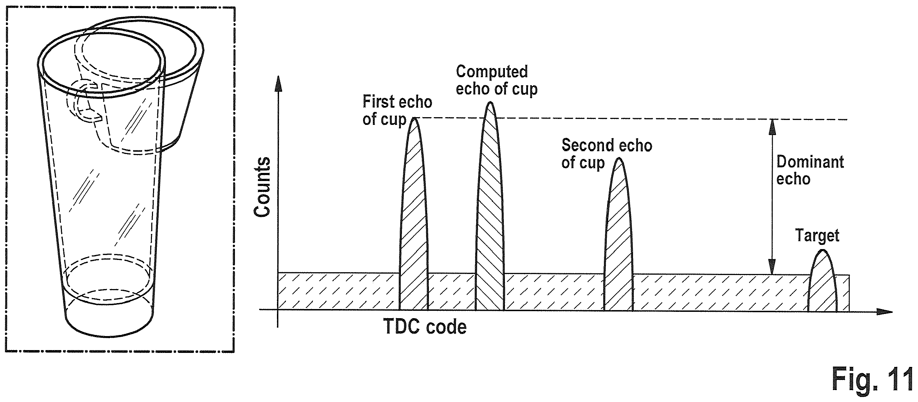

A typical example from an indoor application where gating is particularly useful is shown in Figure 11, with closely placed glass- cup target scene. The proposed DTOF scheme with gating allows to image two objects as two separate peaks related to the glass and the cup effectively by enabling two separate gating ranges around their time of flights. The minigroup timestamping feature allows to acquire the two-peak information simultaneously. An outdoor application where gating can be useful is in a foggy weather condition or the like in order to sense depths and reconstruct scenes.

From every subgroup 41, a set of minigroup data containing, from each minigroup, the photon rank, the minigroup pixel address data of the respective last photon detection event, and the minigroup timestamp data, can be obtained. Furthermore, the subgroup timestamp data from the TDC 61 together with the subgroup pixel address of the first photon detection event in the subgroup 41 is obtained.

The leading edge of the valid signal "valid" enables a FIFO 73 to latch the data from the subgroups 41 to read out into the readout unit 9

There is a 4 bit "event_selector" signal which can then be used to select what information is selected for reading out of the FIFO 73. Under default mode, the latched data can be read out sequentially.

The subgroup timestamp data value may be accumulated over a number of laser cycles and is used to build the full histogram of the timing data. The histogramming itself can be done on-chip or off-chip depending on the resources. The photon rank minigroupN_Ph_rank together with the minigroup pixel address data indicates which pixel the TDC data corresponds to, as shown in timing diagram on Figure 3.

The photon rank apart from providing correspondence with subgroup timestamp data and the subgroup pixel address data, also indicates how many photons occurred in a particular photon detection event, particularly useful to acquire information on the target in terms of what the signal quality is. A high reflective target may reflect more correlated photons and thus, may result in more coincident events. Subgroup photon rank information latched from event counter 66 can provide this estimate.

The minigroup timestamp data can be used in a LiDAR application, for operating the sensor in a ranging mode at longer distances (say between 30-50m) or in an imaging mode in shorter distances. The ranging mode typically requires only single-point timing information and does not demand high timing resolution (for example in cruise control application). Thus, in this mode, the multiple minigroup timestamp data items available from various minigroups 42 enhance histogram statistics by providing 8 (in case of 8 minigroups here in the example) additional timing information in every cycle, thus directly enhancing timing throughput up to 8 times. Again, the subgroup pixel address data allows to correlate the subgroup timestamp data with the corresponding pixel.

In the imaging mode, a high timing resolution is required to reconstruct the target scene in 3D. The functionality of having multiple timestamps in the imaging mode can now be reutilized to "coarse-detect" the peaks to estimate the target range. This allows easing down the process of generating the final histogram by eliminating undesired timing ranges.

Minigroup timestamp data can be read out of each of the minigroups so that up to 8 items of minigroup timestamp data per laser cycle can be detected. Hence, up to 8 peaks can be detected. In the imaging mode, since a higher resolution is needed and given that the minigroup timestamp data is available, although coarse, the 8 different timestamps can indicate the range of the target position. For example, consider in a target scenario with different targets whose distances from the imaging device are between 4m and 5m. Their travel times may thus be only in this range, i.e., between 13ns and 17ns. The ability to provide multiple timestamps simultaneously can allow to grasp this information on multiple targets in the scene and thus, permit to zoom only into this range while ignoring the rest of the possibilities. This eases the process of building histogram by handling much fewer timing data, looking only into the desired target range.

Additionally, these multiple timestamps also help determining the gating range faster when the sensor operates in the gating mode, for instance.

## Claims

1. Direct time-of-flight depth imaging sensor comprising:
- an array of photodetectors (43) arranged in one or more subgroups (41), wherein each subgroup (41) is divided into a plurality of minigroups (42) of photodetectors (43);
- digital processing and communication units (63) each associated to one of the minigroups (42), each comprising:
∘ a minigroup pixel address register (69) to store an address of the photodetector (43) in the respective minigroup (42) which has detected the last photon detection event within a coincidence window, wherein the coincidence window corresponds to detection window of a fixed duration starting with the first photon detection event within the respective subgroup (41); and
∘ a minigroup timestamp unit (68) configured to store minigroup timestamp data of the last photon detection event received in the coincidence window;
- a time to digital converter (61) configured to generate a subgroup timestamp data about the first photon detection event in the subgroup (41) during the coincidence window.

2. Direct time-of-flight depth imaging sensor according to claim 1, further comprising a photon rank unit (75) within each of the minigroups (42) which are configured to store photon rank data indicating the rank of the photons received in the respective minigroup (42) during the coincidence window, wherein particularly the photon rank indicates how many photons occurred in a particular coincident event to acquire information about the signal quality.

3. Direct time-of-flight depth imaging sensor according to claim 1 or 2, further comprising a coincidence tree (64) configured to propagate photon detection events and to generate the minigroup pixel address corresponding to the last photon detection event in the respective minigroup (42) within the coincidence window for storing in the corresponding minigroup pixel address register (69).

4. Direct time-of-flight depth imaging sensor according to any of the claims 1 to 3, further comprising a subgroup event counter (66) configured to provide a subgroup event count corresponding to the number of photon detection events received in the respective subgroup (41) during the coincidence window; wherein the data processing unit is further configured to process the subgroup event count.

5. Direct time-of-flight depth imaging sensor according to any of the claims 1 to 4, wherein a photon activity unit (62), particularly a summing circuit, is provided to obtain an indication about a photon activity rate detected by all photodetectors (43) of the respective subgroup (41),
wherein particularly a coincidence adaptation unit (74) is configured to determine a coincidence threshold depending on the photon activity rate (R), wherein a coincidence comparison unit (78) is provided to signal a validation signal (valid) for reading out the minigroup timestamp data and minigroup pixel address data of the minigroups (42) and the subgroup timestamp data if the photon detection event count is equal or higher than the coincidence threshold event count.

6. Direct time-of-flight depth imaging sensor according to claim 5, wherein at least one gating unit (79) is provided to compare the subgroup timestamp data value with at least one given gating range to generate a validation signal when the subgroup timestamp data value is within the at least one given gating range, wherein particularly
a gating unit (79) has two equality comparison blocks (83a, 83b) to compare the subgroup timestamp data value with two neighboring gating ranges to generate the validation signal (valid) when the subgroup timestamp data value is within one of the two neighboring gating ranges.

7. Direct time-of-flight depth imaging sensor according to claim 7 , wherein several gating units (79) are configured to compare the subgroup timestamp data value with different, particularly non-neighboring gating ranges to generate the validation signal (valid) when the subgroup timestamp data value is within one of the different gating ranges.

8. Direct time-of-flight depth imaging sensor according to claim 6 or 7, wherein the gating range is provided by means of histogramming, wherein the subgroup timestamp data value with the highest number of photon detection counts during a predetermined number of laser cycles are selected to define the gating range.

9. Direct time-of-flight depth imaging sensor according to claim 5 to 8, wherein a mode selector unit (77) is provided to use the validation signals from at least two of:
- from the coincidence comparison unit (78);
- from the at least one gating unit (79); and
- from a conjunction of the outputs of the coincidence comparison unit (78) and the at least one the gating unit (79) for providing the depth image data.

10. Direct time-of-flight depth imaging sensor according to any of the claims 1 to 9, wherein depending on the validation signal the depth image data is read out via a FIFO (73) for further processing in a readout unit (8).

11. Direct time-of-flight depth imaging sensor according to any of the claims 1 to 10, further comprising a readout unit (8) configured to process the subgroup timestamp data and, for each of the minigroups (42), minigroup timestamp data, and the minigroup pixel addresses of the last received photon, so that depth image data is provided in which pixel addresses are associated with depth information corresponding to the subgroup timestamp data and minigroup timestamp data.

12. Direct time-of-flight depth imaging sensor according to any of the preceding claims, wherein an oscillator of the time-to-digital converter provides a frequency signal reference to the minigroup timestamp units (68) whose data is measured between the arrival time of the first photon detection event up to end of the coincidence window to obtain the minigroup timestamp data.

13. Direct time-of-flight depth imaging sensor according to any of the preceding claims, wherein a light source, particularly a diode laser (3), is controlled and triggered by a synchronization signal to emit light pulses, particularly laser pulses, directed onto a desired field of view wherein the emitted light is widened to flash-like illuminate a scene in the desired field of view including the object (O) to be detected.

14. Method for operating a direct time-of-flight depth imaging sensor comprising an array of photodetectors (43) arranged in one or more subgroups (41), wherein each subgroup (41) is divided into a plurality of minigroups (42) of photodetectors (43), comprising the steps of:
- Storing a minigroup pixel address of the photodetector (43) in the respective minigroup (42) which has detected the last photon detection event within a coincidence window, wherein the coincidence window corresponds to detection window of a fixed duration starting with the first photon detection event within the respective subgroup (41); and
- storing minigroup timestamp data of the last photon detection event received in the coincidence window;
- generating a subgroup timestamp data about the first photon detection event in the subgroup (41) during the coincidence window;
- processing the subgroup timestamp data, and, for each of the minigroups (42), minigroup timestamp data, and the minigroup pixel addresses of the last received photon, so that depth image data is provided in which photodetector addresses are associated with depth information corresponding to the subgroup timestamp data and minigroup timestamp data.

15. Method for operating according to claim 14, wherein a scene in a field of view is widely illuminated by light pulses so that reflected light is received by the array of photodetectors (43).

## Patentansprüche

1. Direct-Time-of-Flight-Tiefenbildgebungssensor, umfassend:
- eine Feldanordnung von Photodetektoren (43), die in einer oder mehreren Untergruppen (41) angeordnet sind, wobei jede Untergruppe (41) in eine Vielzahl von Minigruppen (42) von Photodetektoren (43) unterteilt ist;
- digitale Verarbeitungs- und Kommunikationseinheiten (63), die jeweils einer der Minigruppen (42) zugeordnet sind und jeweils Folgendes umfassen:
ein Minigruppen-Pixel-Adressregister (69) zum Speichern einer Adresse des Photodetektors (43) in der jeweiligen Minigruppe (42), der das letzte Photonen-Detektions-Ereignis innerhalb eines Koinzidenzfensters detektiert hat, wobei das Koinzidenzfenster einem Detektionsfenster einer festen Dauer entspricht, die mit dem ersten Photonen-Detektions-Ereignis innerhalb der jeweiligen Untergruppe (41) beginnt; und
eine Minigruppen-Zeitstempel-Einheit (68), die so konfiguriert ist, dass sie Minigruppen-Zeitstempel-Daten des letzten Photonen-Detektions-Ereignisses, das in dem Koinzidenzfenster empfangen wurde, speichert;
- einen Zeit-Digital-Wandler (61), der so konfiguriert ist, dass er während des Koinzidenzfensters Untergruppen-Zeitstempel-Daten über das erste Photon-Detektions-Ereignis in der Untergruppe (41) erzeugt.

2. Direct-Time-of-Flight-Tiefenbildgebungssensor nach Anspruch 1, ferner umfassend eine Photonenrang-Einheit (75) innerhalb jeder der Minigruppen (42), die konfiguriert sind, um Photonenrang-Daten zu speichern, die den Rang der in der jeweiligen Minigruppe (42) während des Koinzidenzfensters empfangenen Photonen angeben, wobei insbesondere der Photonenrang angibt, wie viele Photonen in einem bestimmten Koinzidenzereignis aufgetreten sind, um Informationen über die Signalqualität zu erhalten.

3. Direct-Time-of-Flight-Tiefenbildgebungssensor nach Anspruch 1 oder 2, der ferner einen Koinzidenzbaum (64) umfasst, der so konfiguriert ist, dass er Photonen-Detektions-Ereignisse weiterleitet und die Minigruppen-Pixeladresse erzeugt, die dem letzten Photonen-Detektions-Ereignis in der jeweiligen Minigruppe (42) innerhalb des Koinzidenzfensters entspricht, um sie in dem entsprechenden Minigruppen-Pixeladressregister (69) zu speichern.

4. Direct-Time-of-Flight-Tiefenbildgebungssensor nach einem der Ansprüche 1 bis 3, der ferner einen Untergruppen-Ereigniszähler (66) umfasst, der so konfiguriert ist, dass er eine Untergruppen-Ereignisanzahl bereitstellt, die der Anzahl von Photonen-Detektions-Ereignissen entspricht, die in der jeweiligen Untergruppe (41) während des Koinzidenzfensters empfangen wurden; wobei die Datenverarbeitungseinheit ferner so konfiguriert ist, dass sie die Untergruppen-Ereigniszählung verarbeitet.

5. Direct-Time-of-Flight-Tiefenbildgebungssensor nach einem der Ansprüche 1 bis 4, wobei eine Photonenaktivitätseinheit (62), insbesondere eine Summierschaltung, vorgesehen ist, um eine Angabe über eine von allen Photodetektoren (43) der jeweiligen Untergruppe (41) erfasste Photonenaktivitätsrate zu erhalten,
wobei insbesondere eine Koinzidenzanpassungseinheit (74) konfiguriert ist, um einen Koinzidenzschwellenwert in Abhängigkeit von der Photonenaktivitätsrate (R) zu bestimmen, wobei eine Koinzidenzvergleichseinheit (78) vorgesehen ist, um ein Validierungssignal (valid) zum Auslesen der Minigruppen-Zeitstempeldaten und Minigruppen-Pixeladressdaten der Minigruppen (42) und der Untergruppen-Zeitstempeldaten zu signalisieren, wenn die Anzahl der Photonen-Detektions-Ereignisse gleich oder höher als die Ereignisanzahl des Koinzidenzschwellenwerts ist.

6. Direct-Time-of-Flight-Tiefenbildgebungssensor nach Anspruch 5, wobei mindestens eine Gating-Einheit (79) vorgesehen ist, um den Wert der Untergruppen-Zeitstempeldaten mit mindestens einem vorgegebenen GatingBereich zu vergleichen, um ein Validierungssignal zu erzeugen, wenn der Wert der Untergruppen-Zeitstempeldaten innerhalb des mindestens einen vorgegebenen Gating-Bereichs liegt, wobei insbesondere eine Gating-Einheit (79) zwei Gleichheits-Vergleichsblöcke (83a, 83b) aufweist, um den Wert der Untergruppen-Zeitstempel-Daten mit zwei benachbarten Gating-Bereichen zu vergleichen, um das Validierungssignal (gültig) zu erzeugen, wenn der Wert der Untergruppen-Zeitstempel-Daten innerhalb eines der beiden benachbarten Gating-Bereiche liegt.

7. Direct-Time-of-Flight-Tiefenbildgebungssensor nach Anspruch 7, wobei mehrere Gating-Einheiten (79) so konfiguriert sind, dass sie den Untergruppen-Zeitstempel-Datenwert mit verschiedenen, insbesondere nicht benachbarten Gating-Bereichen vergleichen, um das Validierungssignal (gültig) zu erzeugen, wenn der Untergruppen-Zeitstempel-Datenwert innerhalb eines der verschiedenen Gating-Bereiche liegt.

8. Direct-Time-of-Flight-Tiefenbildgebungssensor nach Anspruch 6 oder 7, wobei der Gatingbereich mittels Histogramm-Erstellung bereitgestellt wird, wobei die Werte der Untergruppen-Zeitstempeldaten mit der höchsten Anzahl von Photonen-Detektions-Anzahlen während einer vorbestimmten Anzahl von Laserzyklen ausgewählt werden, um den Gatingbereich zu definieren.

9. Direct-Time-of-Flight-Tiefenbildgebungssensor nach einem der Ansprüche 5 bis 8, wobei eine Moduswahleinheit (77) vorgesehen ist, um die Validierungssignale von mindestens zwei der folgenden zu verwenden:
- von der Koinzidenzvergleichseinheit (78);
- von der mindestens einen Gatingsteuerungseinheit (79); und
- von einer Verbindung der Ausgänge der Koinzidenz-Vergleichseinheit (78) und der mindestens einen Gatingsteuerungseinheit (79) zur Bereitstellung der Tiefenbildgeberdaten.

10. Direct-Time-of-Flight-Tiefenbildgebungssensor nach einem der Ansprüche 1 bis 9, wobei die Tiefenbildgeberdaten in Abhängigkeit vom Validierungssignal über einen FIFO (73) zur Weiterverarbeitung in einer Ausleseeinheit (8) ausgelesen werden.

11. Direct-Time-of-Flight-Tiefenbildgebungssensor nach einem der Ansprüche 1 bis 10, der ferner eine Ausleseeinheit (8) umfasst, die so konfiguriert ist, dass sie die Untergruppen-Zeitstempeldaten und, für jede der Minigruppen (42), Minigruppen-Zeitstempeldaten und die Minigruppen-Pixeladressen des letzten empfangenen Photons verarbeitet, so dass Tiefenbildgeberdaten bereitgestellt werden, in denen Pixeladressen mit Tiefeninformationen verknüpft sind, die den Untergruppen-Zeitstempeldaten und Minigruppen-Zeitstempeldaten entsprechen.

12. Direct-Time-of-Flight-Tiefenbildgebungssensor nach einem der vorhergehenden Ansprüche, wobei ein Oszillator des Zeit-Digital-Wandlers eine Frequenzsignalreferenz für die Minigruppen-Zeitstempel-Einheiten (68) bereitstellt, deren Daten zwischen der Ankunftszeit des ersten Photonen-Detektions-Ereignisses bis zum Ende des Koinzidenzfensters gemessen werden, um die Minigruppen-Zeitstempeldaten zu erhalten.

13. Direct-Time-of-Flight-Tiefenbildgebungssensor nach einem der vorhergehenden Ansprüche, wobei eine Lichtquelle, insbesondere ein Diodenlaser (3), durch ein Synchronisationssignal gesteuert und getriggert wird, um Lichtimpulse, insbesondere Laserimpulse, zu emittieren, die auf ein gewünschtes Sichtfeld gerichtet sind, wobei das emittierte Licht aufgeweitet wird, um eine Szene in dem gewünschten Sichtfeld einschließlich des zu erfassenden Objekts (O) in Blitzen zu beleuchten.

14. Verfahren zum Betreiben eines Direct-Time-of-Flight-Tiefenbildgebungssensor, der eine Feldanordnung von Fotodetektoren (43) umfasst, die in einer oder mehreren Untergruppen (41) angeordnet sind, wobei jede Untergruppe (41) in eine Vielzahl von Minigruppen (42) von Fotodetektoren (43) unterteilt ist, mit den folgenden Schritten:
- Speichern einer Minigruppen-Pixeladresse des Photodetektors (43) in der jeweiligen Minigruppe (42), der das letzte Photon-Detektions-Ereignis innerhalb eines Koinzidenzfensters detektiert hat, wobei das Koinzidenzfenster einem Detektionsfenster mit einer festen Dauer entspricht, das mit dem ersten Photon-Detektions-Ereignis innerhalb der jeweiligen Untergruppe (41) beginnt; und
- Speichern von Minigruppen-Zeitstempeldaten des letzten Photonen-Detektions-Ereignisses, das in dem Koinzidenzfenster empfangen wurde;
- Erzeugen von Untergruppen-Zeitstempeldaten über das erste Photonen-Detektions-Ereignis in der Untergruppe (41) während des Koinzidenzfensters;
- Verarbeiten der Untergruppen-Zeitstempeldaten und, für jede der Minigruppen (42), der Minigruppen-Zeitstempeldaten und der Minigruppen-Pixeladressen des letzten empfangenen Photons, so dass Tiefenbildgeberdaten bereitgestellt werden, in denen Photodetektoradressen mit Tiefeninformationen verbunden sind, die den Untergruppen-Zeitstempeldaten und den Minigruppen-Zeitstempeldaten entsprechen.

15. Verfahren zum Betreiben nach Anspruch 14, bei dem eine Szene in einem Sichtfeld durch Lichtimpulse breit beleuchtet wird, so dass reflektiertes Licht von der Feldanordnung von Photodetektoren (43) empfangen wird.

## Revendications

1. Capteur d'image de profondeur à temps de vol direct comprenant :
- un réseau de photodétecteurs (43) disposés en un ou plusieurs sous-groupes (41), chaque sous-groupe (41) étant divisé en plusieurs minigroupes (42) de photodétecteurs (43) ;
- des unités de traitement numérique et de communication (63) associées chacune à l'un des minigroupes (42), comprenant chacune
un registre d'adresses de pixels de minigroupe (69) pour stocker une adresse du photodétecteur (43) dans le minigroupe respectif (42) qui a détecté le dernier événement de détection de photons dans une fenêtre de coïncidence, dans laquelle la fenêtre de coïncidence correspond à la fenêtre de détection d'une durée fixe commençant avec le premier événement de détection de photons dans le sous-groupe respectif (41); et
une unité d'horodatage de minigroupe (68) configurée pour stocker les données d'horodatage de minigroupe du dernier événement de détection de photon reçu dans la fenêtre de coïncidence;
- un convertisseur temps-numérique (61) configuré pour générer des données d'horodatage de sous-groupe concernant le premier événement de détection de photons dans le sous-groupe (41) pendant la fenêtre de coïncidence.

2. Capteur d'image de profondeur à temps de vol direct selon la revendication 1, comprenant en outre une unité de rang de photons (75) dans chacun des minigroupes (42) qui sont configurés pour stocker des données de rang de photons indiquant le rang des photons reçus dans le minigroupe respectif (42) pendant la fenêtre de coïncidence, où en particulier le rang de photons indique combien de photons se sont produits dans un événement coïncident particulier pour acquérir des informations sur la qualité du signal.

3. Capteur d'image de profondeur à temps de vol direct selon la revendication 1 ou 2, comprenant en outre un arbre de coïncidence (64) configuré pour propager les événements de détection de photons et pour générer l'adresse du pixel du minigroupe correspondant au dernier événement de détection de photons dans le minigroupe respectif (42) au sein de la fenêtre de coïncidence pour le stockage dans le registre d'adresse de pixel du minigroupe correspondant (69).

4. Capteur d'image de profondeur à temps de vol direct selon l'une des revendications 1 à 3, comprenant en outre un compteur d'événements de sous-groupe (66) configuré pour fournir un compte d'événements de sous-groupe correspondant au nombre d'événements de détection de photons reçus dans le sous-groupe respectif (41) pendant la fenêtre de coïncidence ; l'unité de traitement des données étant en outre configurée pour traiter le compte d'événements de sous-groupe.

5. Capteur d'image de profondeur à temps de vol direct selon l'une des revendications 1 à 4, dans lequel une unité d'activité photonique (62), en particulier un circuit de sommation, est prévue pour obtenir une indication sur un taux d'activité photonique détecté par tous les photodétecteurs (43) du sous-groupe respectif (41),
dans lequel une unité d'adaptation de coïncidence (74) est configurée pour déterminer un seuil de coïncidence en fonction du taux d'activité des photons (R), dans lequel une unité de comparaison de coïncidence (78) est prévue pour émettre un signal de validation (valide) afin de lire les données d'horodatage du minigroupe et les données d'adresse de pixel du minigroupe (42) et les données d'horodatage du sous-groupe si le nombre d'événements de détection de photons est égal ou supérieur au nombre d'événements du seuil de coïncidence.

6. Capteur d'image de profondeur à temps de vol direct selon la revendication 5, dans lequel au moins une unité de gating (79) est prévue pour comparer la valeur des données d'horodatage du sous-groupe à au moins une plage de gating donnée afin de générer un signal de validation lorsque la valeur des données d'horodatage du sous-groupe est comprise dans au moins une plage de gating donnée, en particulier dans lequel une unité de gating (79) comporte deux blocs de comparaison d'égalité (83a, 83b) pour comparer la valeur de l'horodatage du sous-groupe à deux plages de gating voisines afin de générer le signal de validation (valide) lorsque la valeur de l'horodatage du sous-groupe se situe dans l'une des deux plages de gatingvoisines.

7. Capteur d'image de profondeur à temps de vol direct selon la revendication 7, dans lequel plusieurs unités de gating (79) sont configurées pour comparer la valeur des données d'horodatage du sous-groupe avec des plages de gating différentes, en particulier non voisines, afin de générer le signal de validation (valide) lorsque la valeur des données d'horodatage du sous-groupe est comprise dans l'une des différentes plages de gating.

8. Capteur d'image de profondeur à temps de vol direct selon la revendication 6 ou 7, dans lequel la plage de gating est fournie au moyen d'un histogramme, la valeur des données d'horodatage du sous-groupe présentant le nombre le plus élevé de comptes de détection de photons au cours d'un nombre prédéterminé de cycles laser étant sélectionnée pour définir la plage de gating.

9. Capteur d'image de profondeur à temps de vol direct selon l'une des revendications 5 à 8, dans lequel une unité de sélection de mode (77) est prévue pour utiliser les signaux de validation provenant d'au moins deux des éléments suivants
- de l'unité de comparaison des coïncidences (78) ;
- de la part d'au moins une unité de gating (79) ; et
- d'une conjonction des sorties de l'unité de comparaison des coïncidences (78) et de l'au moins une unité de gating (79) pour fournir les données d'image de profondeur.

10. Capteur d'image de profondeur à temps de vol direct selon l'une des revendications 1 à 9, dans lequel, en fonction du signal de validation, les données d'image de profondeur sont lues via une FIFO (73) en vue d'un traitement ultérieur dans une unité de lecture (8).

11. Capteur d'image de profondeur à temps de vol direct selon l'une des revendications 1 à 10, comprenant en outre une unité de lecture (8) configurée pour traiter les données d'horodatage du sous-groupe et, pour chacun des minigroupes (42), les données d'horodatage du minigroupe et les adresses de pixel du minigroupe du dernier photon reçu, de manière à fournir des données d'image de profondeur dans lesquelles les adresses de pixel sont associées aux informations de profondeur correspondant aux données d'horodatage du sous-groupe et aux données d'horodatage du minigroupe.

12. Capteur d'image de profondeur à temps de vol direct selon l'une des revendications précédentes, dans lequel un oscillateur du convertisseur temps-numérique fournit un signal de fréquence de référence aux unités d'horodatage de minigroupe (68) dont les données sont mesurées entre l'heure d'arrivée du premier événement de détection de photon et la fin de la fenêtre de coïncidence afin d'obtenir les données d'horodatage de minigroupe.

13. Capteur d'image de profondeur à temps de vol direct selon l'une des revendications précédentes, dans lequel une source lumineuse, en particulier un laser à diode (3), est commandée et déclenchée par un signal de synchronisation pour émettre des impulsions lumineuses, en particulier des impulsions laser, dirigées sur un champ de vision souhaité, dans lequel la lumière émise est élargie pour éclairer par flash une scène dans le champ de vision souhaité, y compris l'objet (O) à détecter.

14. Méthode de fonctionnement d'un capteur d'image de profondeur à temps de vol direct comprenant une matrice de photodétecteurs (43) disposés en un ou plusieurs sous-groupes (41), chaque sous-groupe (41) étant divisé en plusieurs minigroupes (42) de photodétecteurs (43), comprenant les étapes suivantes :
- stocker une adresse de pixel de minigroupe du photodétecteur (43) dans le minigroupe (42) respectif qui a détecté le dernier événement de détection de photon dans une fenêtre de coïncidence, la fenêtre de coïncidence correspondant à la fenêtre de détection d'une durée fixe commençant par le premier événement de détection de photon dans le sous-groupe (41) respectif ; et
- stocker les données d'horodatage du minigroupe du dernier événement de détection de photons reçu dans la fenêtre de coïncidence ;
- générer des données d'horodatage de sous-groupe concernant le premier événement de détection de photons dans le sous-groupe (41) pendant la fenêtre de coïncidence ;
- traiter les données d'horodatage du sous-groupe et, pour chacun des minigroupes (42), les données d'horodatage du minigroupe et les adresses des pixels du minigroupe du dernier photon reçu, de manière à fournir des données d'image de profondeur dans lesquelles les adresses des photodétecteurs sont associées aux informations de profondeur correspondant aux données d'horodatage du sous-groupe et aux données d'horodatage du minigroupe.

15. Procédé de fonctionnement selon la revendication 14, dans lequel une scène dans un champ de vision est largement éclairée par des impulsions lumineuses de sorte que la lumière réfléchie est reçue par le réseau de photodétecteurs (43).
